Europäisches Patentamt

European Patent Office

Office européen des brevets

(19)

(11) **EP 1 166 403 B1**

(12) **EUROPÄISCHE PATENTSCHRIFT**

(45) Veröffentlichungstag und Bekanntmachung des Hinweises auf die Patenterteilung:
**18.06.2003  Patentblatt 2003/25**

(21) Anmeldenummer: **00930991.5**

(22) Anmeldetag: **24.03.2000**

(51) Int Cl.⁷: $H01S\ 3/098$, $G02F\ 1/35$

(86) Internationale Anmeldenummer:
**PCT/DE00/00939**

(87) Internationale Veröffentlichungsnummer:
**WO 00/059082 (05.10.2000 Gazette 2000/40)**

(54) **VORRICHTUNG ZUR ERZEUGUNG KURZER IMPULSE DURCH PASSIVE MODENKOPPLUNG**

DEVICE FOR PRODUCING SHORT PULSES BY PASSIVE MODE LOCK

DISPOSITIF POUR PRODUIRE DE BREVES IMPULSIONS PAR COUPLAGE PASSIF DES MODES

(84) Benannte Vertragsstaaten:
**AT BE CH CY DE DK ES FI FR GB GR IE IT LI LU MC NL PT SE**

(30) Priorität: **25.03.1999  DE 19915129
02.11.1999  DE 19954109**

(43) Veröffentlichungstag der Anmeldung:
**02.01.2002  Patentblatt 2002/01**

(73) Patentinhaber: **Forschungsverbund Berlin e.V.
12489 Berlin (DE)**

(72) Erfinder:
- **GLAS, Peter
  D-10369 Berlin (DE)**
- **LEITNER, Martin
  D-10437 Berlin (DE)**

(74) Vertreter: **Hoffmann, Heinz-Dietrich et al
Gemeinsamer Patentservice,
Hausvogteiplatz 5-7
10117 Berlin (DE)**

(56) Entgegenhaltungen:
- **ZHUHONG ZHANG ET AL: "GALLIUM ARSENIDE: A NEW MATERIAL TO ACCOMPLISH PASSIVELY MODE- LOCKED ND:YAG LASER" APPLIED PHYSICS LETTERS,US,AMERICAN INSTITUTE OF PHYSICS. NEW YORK, Bd. 60, Nr. 4, 27. Januar 1992 (1992-01-27), Seiten 419-421, XP000305283 ISSN: 0003-6951 in der Anmeldung erwähnt**

- **GRANT R S ET AL: "COUPLED-CAVITY MODE LOCKING WITH PASSIVE SEMICONDUCTOR WAVEGUIDES" OPTICS LETTERS,US,OPTICAL SOCIETY OF AMERICA, WASHINGTON, Bd. 18, Nr. 19, 1. Oktober 1993 (1993-10-01), Seiten 1600-1602, XP000396944 ISSN: 0146-9592**
- **GATZ S ET AL: "KERR-LENS MODE LOCKING WITHOUT DISPERSION COMPENSATION" OPTICS LETTERS,US,OPTICAL SOCIETY OF AMERICA, WASHINGTON, Bd. 21, Nr. 19, 1. Oktober 1996 (1996-10-01), Seiten 1573-1575, XP000630420 ISSN: 0146-9592**
- **XU G H ET AL: "Cavity design of a compact Kerr-lens mode-locking laser" OPTICS COMMUNICATIONS,NL,NORTH-HOLLAND PUBLISHING CO. AMSTERDAM, Bd. 142, Nr. 4-6, 15. Oktober 1997 (1997-10-15), Seiten 249-252, XP004093990 ISSN: 0030-4018**
- **H.S.LOKA ET AL.: "Optical characterization of low-temperature-grown GaAs for ultrafast all-optical switching devices" IEEE JOURNAL OF QUANTUM ELECTRONICS, Bd. 34, Nr. 8, August 1998 (1998-08), Seiten 1426-1437, XP002144892**
- **T.F.BOGGESS ET AL.: "Nonlinear-optical energy regulation by nonlinear refraction and absorption in silicon" OPTICS LETTERS, Bd. 9, Nr. 7, Juli 1984 (1984-07), Seiten 291-293, XP002144893**

**Beschreibung**

Die Erfindung betrifft eine Vorrichtung gemäß dem Oberbegriff des Anspruchs 1 zur Erzeugung kurzer Impulse durch passive Modenkopplung, bei der ein optisches Medium als Laserquelle zwischen zwei Reflektoren angeordnet ist und bei der ein Reflektor optisch nichtlineare Eigenschaften aufweist.

Die Entwicklung von Laserquellen mit anwenderspezifischen Eigenschaften ist die Aufgabe der modernen Lasertechnik. Für viele Anwendungen werden kompakte Laser, die im .Impulsbetrieb hohe Leistungen generieren, benötigt. Üblicherweise werden kurze Impulse mittels Modensynchronisation erzeugt. Ein wesentlicher Fortschritt bei der Erzeugung kurzer Impulse wurde durch den Einsatz von Halbleiterbauelementen (z.B.Halbleiter-Quantenwall) erzielt. In der EP 0805529 A2 wird eine Vorrichtung zur Erzeugung sehr kurzer Laserimpulse beschrieben, bei der ein optisches Medium als Laserquelle zwischen zwei Reflektoren angeordnet ist, bei der ein Reflektor mit Halbleiterschichten versehen ist, die den auftreffenden Laserstrahl intensitätsabhängig absorbieren. Diese Bauelemente werden als nichtlineare Reflektoren derart ausgebildet, daß ein oder mehrere Halbleiter- "quantum wells" (Quantenwall) mit einer Dicke von $n \cdot \lambda/2$, wobei n eine ungerade Zahl größer 1 ist, auf einen Standard-Bragg- Reflektor, der ebenfalls aus Halbleitermaterial besteht, aufgebracht werden. Die Herstellung der Halbleiter-"quantum wells" muß bei niedrigen Temperaturen erfolgen, damit die nichtstrahlende Rekombination der durch die Strahlung erzeugten Ladungsträger in sehr kurzer Zeit vor sich geht. Durch Ausbleichen (Sättigung) der Absorption des speziellen Halbleitermaterials wird eine Verlustmodulation erzeugt, die zur Synchronisation der Moden des Lasers führt.

Den bekannten Vorrichtungen haften insbesondere folgende Nachteile an. Es ist eine sehr aufwendige Herstellungstechnologie (Molekularstrahlepitaxie) erforderlich. Der Herstellungsprozeß, der bei tiefen Temperaturen abläuft, führt zu starken Verspannungen im Material, die sowohl die linearen optischen als auch die spektroskopischen Eigenschaften (Lage der Absorptionsresonanz) nachteilig beeinflussen. Die spektrale Lage der Absorptionsresonanz, die mit der Laserwellenlänge übereinstimmen muß, ist nur durch ein "trial and error"-Verfahren einstellbar, da sowohl die Zusammensetzung des Halbleitermaterials (III-V-Verbindung) als auch die Verspannung (Züchtungstemperatur) sich wechselseitig bezüglich der spektralen Lage der Absorptionsresonanz beeinflussen. Zur Anpassung der Laserintensität an die erforderliche Sättigungsintensität kann eine Seite des Bauelements (die dem Bragg-Reflektor abgewandte Seite) mit einer dielektrischen Verspiegelung versehen werden.

In "Gallium arsenide: A new material to accomplish passively mode-locked Nd:YAG laser" ZHANG, Z; u. a. -Appl. Phys. Lett.,Vol. 60, No. 4, 1992, S. 419 - 421 wird die Erzeugung kurzer Impulse durch passive Modenkopplung in einem YAG Laser unter Zuhilfenahme von semi-insulating GaAs beschrieben. Die Impulserzeugung wird auf die Wirkung von sättigbarer Absorption im Ga As zurückgeführt. Es wird ebenfalls darauf hingewiesen, daß durch Interferenzeffekte in einer 500μm dicken GaAs Platte eine Modifizierung des Brechungsindex auftritt, der ein Einfluß auf die Impulserzeugung zugeschrieben wird.

In der DE 196 42 925 A1 wird der Kerr Effekt, der im Glas über einen nichtlinearen Prozeß zu einer Einschnürung des Lichtbündels und zur Drehung der Polarisationsebene führt, als Wirkmechanismus zur Erzielung von Modensynchronisation beschrieben. Zusätzlich ist in einer solchen Anordnung noch ein sättigbarer Absorber notwendig, um den Impulsbetrieb zu starten.

Eine analoge Lösung wird von Keller, U. "Ultrafast all-solid state laser technology" in Appl. Phys. B, Vol. 58,1994, S. 347 - 363 beschrieben. Als wesentliches Element zum Anfachen des Impulsbetriebs oder zur Formung der Impulse in einem cw-gepumpten Laser wird ein sättigbarer Absorber verwendet.

Die Verwendung dieser nichtlinearen Reflektoren bietet den Vorteil, daß der Prozeß der Impulserzeugung selbststartend ist.

Die Aufgabe der Erfindung besteht darin, eine selbststartende Vorrichtung zur Erzeugung kurzer Impulse anzugeben, die sich einfach herstellen läßt und keine Anpassung der Laserwellenlänge an eine spektral schmale Absorptionsresonanz des Halbleitermaterials erfordert und somit an unterschiedliche Laser anpaßbar ist.

Erfindungsgemäß wird diese Aufgabe durch eine Vorrichtung der eingangs genannten Art dadurch gelöst, daß der optisch nichtlineare Reflektor aus einer refraktionsgesteuerten Halbleiterschicht, die einen intensitätsabhängigen Brechungsindex aufweist und einer in Richtung des Laserstrahlverlaufs dahinter angeordneten hochreflektierenden Schicht gebildet ist. In der refraktionsgesteuerten Halbleiterschicht wird die Laserstrahlung in Abhängigkeit von der jeweiligen Intensität unterschiedlich gebrochen. Für das Halbleitermaterial der refraktionsgesteuerten Halbleiterschicht gelten folgende Bedingungen:

- eine strahlungsinduzierte Ladungsträgergeneration findet durch 2-Photonenabsorption statt,
- für die Energie des Laserphotons $h\nu$ bezogen auf den Bandabstand des Halbleitermaterials $E_g$ gilt: $h\nu < E_g < 1{,}4\,h\nu$,
- die Ladungsträgerrelaxationszeit ist wesentlich kürzer als die Lichtumlaufzeit zwischen den beiden Reflektoren und größer oder gleich der Dauer der erzeugten Impulse.
- die Brechungsindexänderung ist intensitätsabhängig
- im Bereich großer Intensität kommt es zu einer Verringerung des Brechungsindex, im Bereich kleiner Intensität kommt es zu einer Vergrößerung des Brechungsindex,

- die intensitätsabhängige Änderung des Brechungsindex ist groß im Vergleich zu allen anderen Brechungsindexänderungen
- der lineare Absorptionskoeffizient ist nicht von der Intensität abhängig,
- das refraktionsgesteuerte Material ist für kurze Impulse hinreichend strahlungsfest (Zerstörschwelle >10GW / cm$^2$).

In diesem Material wird durch die Laserstrahlung eine Zerstreuungslinse erzeugt.

Eine Reihe von Materialien erfüllt grundsätzlich diese Bedingungen, z.B. GaAs - ionenimplantiert (As, O)-, GaAs -bei niedrigen Temperaturen gewachsen (LT-GaAs)- und amorphes Si.

Im Strahlenverlauf sind zwischen der Laserquelle und dem nichtlinearen Reflektor Mittel zur Begrenzung des Durchmessers des Laserstrahls und ein aus mindestens zwei Linsen bestehendes Linsensystem angeordnet. Die in Richtung auf den nichtlinearen Reflektor liegende erste Linse hat eine kollimierende Wirkung und die in Richtung auf den nichtlinearen Reflektor liegende zweite Linse hat eine fokussierende Wirkung. Der Abstand zwischen der zweiten Linse und der refraktionsgesteuerten Schicht des nichtlinearen Reflektors ist derart eingestellt, daß der sich einstellende Durchmesser der Intensitätsverteilung an dem Mittel zur Begrenzung des Durchmessers des Laserstrahls für kleine Intensitäten größer ist als der Durchmesser des Mittels zur Begrenzung des Durchmessers des Laserstrahls.

Die reflektierende Schicht des nichtlinearen Reflektors, deren Reflexionsvermögen in Abhängigkeit der verwendeten Materialien wählbar ist, kann als Vielfachschicht, beispielsweise bestehend aus dielektrischen Materialien oder Halbleitermaterialien oder als Metallbelegung ausgebildet sein.

Mit der erfindungsgemäßen Vorrichtung lassen sich in einem Laser selbststartend kurze Impulse erzeugen. Die vorgeschlagene Anordnung ist im Vergleich zur Realisierung von Halbleiter-"quantum wells" aus verschiedenen Materialien einfacher herzustellen, sie ist integrierbar, erfordert keine Anpassung der Laserwellenlänge an eine spektral schmale Absorptionsresonanz des Halbleitermaterials und ist daher an unterschiedliche Laser anpaßbar.

Mit dieser Vorrichtung erfolgt auch eine Kompensation refraktiver Effekte, die durch nichtlineare Wechselwirkung des Laserlichts mit den im Laserresonator vorhandenen Materialien auftreten, da die Brechungsindexinkremente für das refraktionsgesteuerte Halbleitermaterial und die optischen Medien umgekehrte Vorzeichen aufweisen. Durch geeignete Dimensionierung der Schichtdicke der refraktionsgesteuerten Halbleiterschicht sowie der Wege in optischen Materialien (z. B. Glas) kann die Kompensation der refraktiven Effekte gezielt eingestellt werden.

Weitere vorteilhafte Ausgestaltungen der Vorrichtung können den Unteransprüchen entnommen werden. So ist es beispielsweise vorteilhaft, den optisch nichtlinearen Reflektor auf einem Träger anzuordnen. Die refraktionsgesteuerte Schicht besitzt vorteilhafterweise eine optische Dicke, die größer oder gleich der verwendeten Wellenlänge der Laserstrahlung ist, d.h. die Schichtdicke wird je nach Wellenlänge im Bereich einiger Mikrometer (μm) liegen. Weiterhin ist es vorteilhaft, wenn die der Laserquelle zugewandte Seite der refraktionsgesteuerten Schicht entspiegelt ist.

Eine aktive Temperaturstabilisierung ist nicht erforderlich.

Ein besonderer Vorteil der vorgeschlagene Anordnung besteht darin, daß eine starke Nichtlinearität auf einer sehr kurzen Lichtdurchlauflänge realisiert wird.

Die Erfindung soll anhand eines Ausführungsbeispiels näher erläutert werden.

Die dazugehörigen Zeichnungen zeigen:

Fig. 1:     Vorrichtung zur Erzeugung kurzer Impulse,
Fig. 2:     Darstellung der Durchmesser der Intensitätsverteilung
Fig. 3:     Darstellung der Verlustmodulation

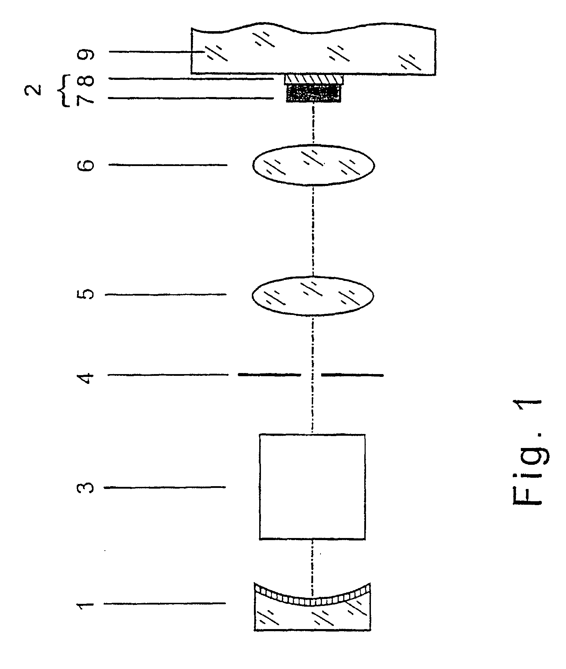

Eine Ausführungsform der Vorrichtung zur Erzeugung kurzer Impulse ist in Fig. 1 dargestellt. Ein verstärkendes Medium dient als Laserquelle **3**, die mittels eines cw-Diodenlasers oder eines Diodenlaser-Arrays optisch gepumpt wird. Die Einkopplung der Diodenstrahlung in die Laserquelle **3** erfolgt nach bekannten Methoden. Die Laserquelle **3** kann in Form eines Stabs, einer Platte oder einer Faser ausgebildet sein. Die Laserquelle **3** befindet sich in einem linearen Resonator, der durch die Reflektoren **1** und **2** begrenzt wird. Der Reflektor **1** ist für die Laserwellenlänge hoch reflektierend, für die Pumpstrahlung jedoch hoch transmittierend. Der Resonator weist im Strahlenverlauf ein Mittel zur Begrenzung des Durchmessers des Laserstrahls auf. Besteht die Laserquelle **3** aus einem stab- bzw. plattenförmigen verstärkenden Medium wird als Mittel zur Begrenzung des Durchmessers des Laserstrahls eine Blende **4** verwendet. Besteht die Laserquelle **3** aus einer Faser als verstärkendes Medium, übernimmt der Faserkern die Funktion des Mittels zur Begrenzung des Durchmessers des Laserstrahls. Der Strahlquerschnitt der Laserstrahlung wird in geeigneter Weise durch das Mittel zur Begrenzung des Durchmessers des Laserstrahls auf den transversalen Grundmode beschränkt. Das Linsensystem mit den beiden Linsen **5** und **6** dient dazu, den durch die Blende **4** begrenzten Laserstrahl in Strahlrichtung des nichtlinearen Reflektors **2** mittels der Linse **5** zu kollimieren und mittels der Linse **6** auf den nichtlinearen Reflektor **2** zu fokussieren. Der nichtlineare Reflektor **2** besteht aus der refraktionsgesteuerten Schicht **7** und aus einer hochreflektierenden Schicht **8**, die hinter der refraktionsgesteuerten Schicht **7** angeordnet ist. Der nichtlineare Reflektor **2** ist zur besseren Handhabung auf einem Träger **9** angeordnet.

In diesem Beispiel wird als Halbleitermaterial für die refraktionsgesteuerte Schicht **7** ein GaAs 2-Photonenabsorber, der bei niedrigen Temperaturen gezüchtet wurde (low temperature [LT] grown GaAs) verwendet. Die refraktionsgesteuerte Schicht **7** ist mit einer Dicke von einigen Mikrometern (μm) ausgebildet. Der nichtlineare Effekt, der in der refraktionsgesteuerten Schicht **7** erzeugt wird, ist proportional zum Quadrat der Intensität des Laserstrahls. Das Reflexionsvermögen der hochreflektierenden Schicht **8** kann in Abhängigkeit von den verwendeten Materialien eingestellt werden. Sie kann standardmäßig als Vielfachschicht, bestehend aus dielektrischen Materialien oder Halbleitermaterialien oder als Metallbelegung ausgebildet sein.

Zweckmäßigerweise ist der optisch nichtlineare Reflektor **2** auf einem Träger **9** angeordnet, dessen Aufgabe darin besteht, die Justierung des nichtlinearen Reflektors **2** hinsichtlich der auftreffenden Laserstrahlung zu ermöglichen.

Vorteilhafterweise wird zur Vermeidung unerwünschter Fabry-Perot-Effekte die Vorderseite des Halbleitermaterials der refraktionsgesteuerten Schicht **7** entspiegelt.

Die Wirkung des nichtlinearen Effekts in der refraktionsgesteuerten Schicht **7** wird am Beispiel einer Halbleiterschicht bezogen auf die Laserstrahlgeometrie und die Emissionswellenlänge des Lasers nachfolgend beschrieben.

Die durch 2-Photonenabsorption generierten freien Ladungsträger sind durch Intensität, Diffusions- und Rekombinationszeit bestimmt. Für Impulse, deren Dauer τ klein im Vergleich zur Diffusions- und Rekombinationszeit ist, ist die zeitliche Änderung der Elektronendichte nicht durch diese beiden Prozesse bestimmt. Man erhält für die zeitliche Änderung der Ladungsträgerkonzentration in Abhängigkeit der Intensitätsverteilung

$$dn_e/dt = (\beta\,/\,2h\upsilon)\,I^2(t),$$

daraus ergibt sich für die Ladungsträgerkonzentration

$$n_e = (\beta/2h\upsilon)\,I^2\,\tau,$$

dabei ist

I       die Intensität
hυ     die Energie des Laserphotons
β       beschreibt die 2-Photonenabsorption z.B. gilt für β:

GaAs, ionenimplantiert: ca. 30 cm/GW
LT-GaAs: 25·< β < 45 cm/GW
amorphes Si: ca. 52 cm/GW.

Die Intensitätsänderung des Laserlichts in der Ausbreitungsrichtung z ist,

$$dI(z,t)/dz = -\alpha\,I(z,t)-\beta\,I^2(z,t),$$

vorausgesetzt die Rayleighlänge ist groß im Vergleich zur Dicke d der refraktionsgesteuerten Schicht **7**, dabei ist

α       der lineare Absorptionskoeffizient
z.B. gilt für α:

GaAs, ionenimplantiert: ca. $5\ 10^3$ cm$^{-1}$
LT-GaAs: 100 cm$^{-1}$ < α < 1000 cm$^{-1}$
amorphes Si: ca. $5\ 10^3$ cm$^{-1}$.

Wird die lineare Absorption vernachlässigt, erhält man für die Intensität nach zweimaligem Durchgang durch die refraktionsgesteuerte Schicht **7** mit der Dicke d

$$I(2d) = I_o * (1+ I_o\,\beta\,d),$$

vorausgesetzt wird dabei, daß der Reflexionsgrad der hochreflektierenden Schicht **8**, die sich hinter der refraktionsgesteuerten Schicht **7** befindet, nahezu 100% beträgt.

Eine Ladungsträgeränderung ist nach dem Drude-Modell mit einer Brechungsindexänderung $\Delta n_e$ verknüpft.

Diese beträgt

$$\Delta n_e = C \cdot n_{e,}$$

dabei ist

$$C = - e^2 \, p \, / \, (2 \cdot n_o \cdot \varepsilon_o \cdot m_{eh} \cdot \omega^2)$$

$n_o$     ist der Brechungsindex des Mediums,
$\varepsilon_o$     ist die Dielektrizitätskonstante des Mediums,
$m_{eh}$     ist die reduzierte Masse des Elektron-Loch-Paars,
$\omega$     ist die zirkulare Laserfrequenz,
$p$     berücksichtigt Beiträge zum nichtlinearen Brechungsindex, die nicht durch das Drude-Modell beschrieben werden.

Um die Ladungsträgerkonzentration $n_e$, die für die Größe der Brechungsindexänderung $\Delta n_e$ verantwortlich ist, zu bestimmen, integriert man $dn_e/dt$ über die Ladungsträgerrelaxationszeit $\tau_a$. Unter Verwendung der Intensität I (2d) erhält man für $\Delta n_e$:

$$\Delta n_e = \beta \, C \, I_o^2 \cdot \tau_a / (2h\upsilon) \cdot (1 + I_o \beta 2d \cdot)^2$$

z.B. gilt für $\tau_a$:

GaAs, ionenimplantiert: < 200 fs
LT-GaAs: < 500 fs
amorphes Si: > 800 fs.

Dieser Ausdruck ist als Näherung zu betrachten, da die oben gemachten Einschränkungen bezüglich der Impulsdauer zu berücksichtigen sind und weiterhin eine Änderung der Impulsintensität während der Impulsdauer nicht berücksichtigt wird.

Die Brechungsindexänderung, die durch den Kerr-Effekt hervorgerufen wird und die das gleiche Vorzeichen wie die ladungsträgerbedingte Brechungsindexänderung besitzt, ist:

$$\Delta n_{Kerr} = \gamma \, I$$

unter der Voraussetzung, daß für die Energie des Laserphotons $h\upsilon$ bezogen auf den Bandabstand des Halbleitermaterials $E_g$ die Bedingung gilt:

$$h\upsilon < E_g < 1.4 h\upsilon,$$

wobei der Koeffizient $\gamma$ mittels folgender Gleichung aus dem nichtlinearen Brechungsindex $n_2$ ermittelt wird:

$$\gamma = 4 \, \pi \, n_2 \cdot / n$$

z.B. gilt für $\gamma$:

GaAs, ionenimplantiert: -3,2·$10^{-13}$ cm$^2$ / W
LT-GaAs: -3,5·$10^{-13}$ cm$^2$ / W
amorphes Si: (muß experimentell ermittelt werden)

Die totale Phasenänderung, die das Licht beim Durchgang durch die refraktionsgesteuerte Schicht **7** erfährt, beträgt:

$$\Delta\Phi = 2d\, k_o\, (\Delta n_e + \Delta n_{Kerr})$$

$$= 2d\, k_o\, (\gamma \cdot I + \beta \cdot C \cdot \tau_a \cdot I_o{}^2 \,/\, (2h\upsilon)\, (1 + 2\, d\, I_o \cdot \beta)^2),$$

dabei ist

$k_o$ die Ausbreitungskonstante für Laserlicht.

Die Brennweite f der resultierenden negativen Linse ($\gamma < 0$, $C < 0$) erhält man unter Berücksichtigung der Annahme, daß die Brechungsindexverteilung eine quadratische Phasenverschiebung bewirkt und daß die Strahltaille w nahezu auf der Oberfläche der refraktionsgesteuerten Schicht **7** liegt. Die Phasenverschiebung ist in quadratischer Näherung:

$$\Delta\Phi = k_o w^2 / 2\, f,$$

woraus sich die Brennweite f ermitteln läßt:

$$f = k_o w^2 / 2\, \Delta\Phi = w^2 / 2\, d(\gamma I + \beta\, C\, \tau_a \cdot I_o{}^2 /(2\, h\upsilon) \cdot (1 + 2d\, I_o \beta)^2).$$

Der nichtlineare Effekt, der in den von der Laserstrahlung durchsetzten optischen Materialien im Resonator, beispielsweise dem Medium der Laserquelle **3** sowie der Linsen **5** und **6**, auftritt, wird wie folgt abgeschätzt:

Die durch den Kerr-Effekt hervorgerufene Brechungsindexänderung in den optischen Materialien $\Delta n_{Kerr,Glas}$ beträgt:

$$\Delta n_{Kerr,Glas} = \gamma\, I,$$

wobei

$$\gamma = +1{,}55 \cdot 10^{-16}\, cm^2 \,/\, W$$

für optische Materialien (z.B. Glas) ist.

Da $\Delta n_{Kerr}$ ein positives Vorzeichen besitzt, zeigen optische Materialien in Abhängigkeit von der Intensität ein fokussierendes Verhalten. Bekanntlich ist die intensitätsabhängige Brechungsindex-(Phasen)-änderung nicht nur für Selbstdefokussierung (negatives Vorzeichen von $\Delta n$) oder Selbstfokussierung (positives Vorzeichen von $\Delta n$) verantwortlich sondern auch für Selbstphasenmodulation. Die intensitätsabhängige Phasenänderung während des Impulsverlaufs läßt sich nach vorgenannten Beziehungen mit

$$\Delta\Phi = 2 \cdot d \cdot k_o \cdot (\Delta n_e + \Delta n_{Kerr,Halbl})\ \text{bzw.}\ \Delta\Phi_{Glas} = 2 \cdot d \cdot k_o \cdot \Delta n_{Kerr,Glas}$$

angeben, d.h., daß die im Lasermaterial auftretende Selbstphasenmodulation (positives Vorzeichen von $\Delta n$) durch eine Selbstphasenmodulation (negatives Vorzeichen von $\Delta n$) im Halbleitermaterial der refraktionsgesteuerten Schicht **7** kompensiert werden kann. Voraussetzung dafür ist, daß die Brechungsindexänderung dem Impulsverlauf folgt d.h., daß die Ladungsträgerrelaxationszeit kleiner als die Impulsdauer ist. Dabei kann der Betrag des Verhältnisses

$$|(\Delta n_e + \Delta n_{Kerr,Halbl}) \,/\, \Delta n_{Kerr,Glas})| \sim 10^5$$

betragen.

Daraus folgt, daß eine Kompensation des nichtlinearen Effekts, der in den von der Laserstrahlung durchsetzten optischen Materialien im Resonator auftritt, durch den nichtlinearen Effekt im Halbleitermaterial im vorgenannten Verhältnis kompensierbar ist. Das bedeutet, daß für eine Kompensation von Phasenänderungen das Materiallängenverhältnis $d_{Halbl.}$ / $d_{Glas}$ im Bereich von $10^5$ liegen kann, z.B. entsprechen dann einer Schichtdicke $d_{Halbl.}$ von 10 µm ein Glasweg von 100 cm.

Unter Kenntnis und gezielter Ausnutzung der vorgenannten physikalischen Zusammenhänge wird in dem Halbleitermaterial der refraktionsgesteuerten Schicht **7** ein Brechungsindexprofil erzeugt, das sich räumlich und zeitlich der Intensitätsverteilung der auffallenden Laserstrahlung entsprechend nachbildet. Die im Halbleitermaterial der refraktionsgesteuerten Schicht **7** durch die auffallende Laserstrahlung erzeugten Ladungsträger und der elektronische Kerr-Effekt ergeben einen Beitrag zum Brechungsindex mit negativem Vorzeichen, d.h. der örtliche Intensitätsverlauf der Strahlung entspricht einem Brechungsindexverlauf im Halbleitermaterial der refraktionsgesteuerten Schicht **7**, wobei an Stellen hoher Intensität die Zahl der generierten Ladungsträger groß ist, damit ist das Brechungsindexinkrement $\Delta n$ dem Betrage nach ebenfalls groß, besitzt aber ein negatives Vorzeichen. Die bei einer Bestrahlung mit einem Laserstrahl, der eine gaußförmige Intensitätsverteilung aufweist, entstehende Brechungsindexverteilung im Halbleitermaterial bewirkt, daß die optische Weglänge $d\cdot(n_0-\Delta n)$ in den Randbereichen der Verteilung, den Bereichen mit geringer Intensität, groß ist, da der Betrag $|\Delta n|$ klein ist. Die optische Weglänge in dem mittleren Bereich der Verteilung, dem Bereich mit hoher Intensität, ist dagegen klein, da der Betrag $|\Delta n|$ groß ist. Für die Laserstrahlung bildet sich eine Zerstreuungslinse im Halbleitermaterial der refraktionsgesteuerten Schicht **7** heraus. Die Brennweite dieser Zerstreuungslinse ist von der Form des Intensitätsprofils, von der absoluten Intensität der Laserstrahlung und der Größe des Fokusflecks, der im Halbleitermaterial erzeugt wird, abhängig.

Das Halbleitermaterial der refraktionsgesteuerten Schicht **7** ist so ausgewählt, daß für Laserstrahlung kleiner Intensität eine geringe Absorption auftritt. Die Erzeugung von Ladungsträgern erfolgt über eine 2-Photonenabsorption. Der elektronische Kerr-Effekt ist eine Eigenschaft des Materials unter Strahlungseinfluß.

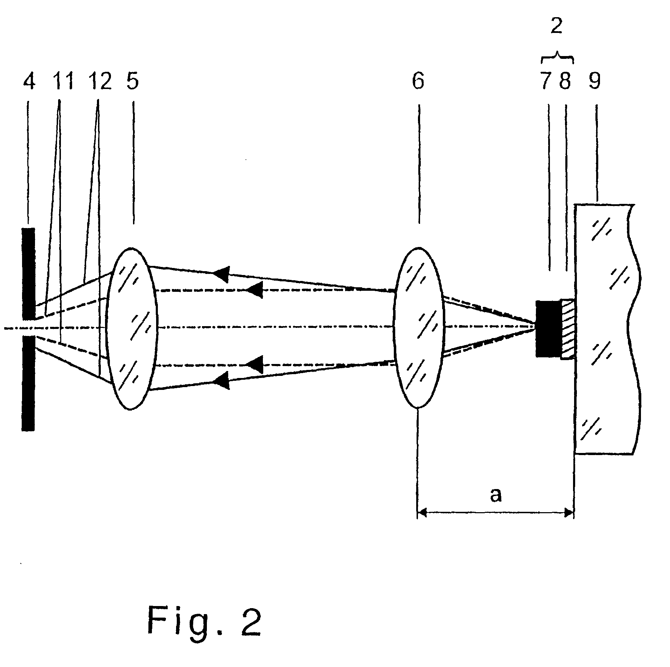

Anhand der Fig. 2 wird der Einfluß der durch die intensitätsabhängige Brechungsindexverteilung im Halbleitermaterial der refraktionsgesteuerten Schicht **7** erzeugten Zerstreuungslinse auf die Strahlungsfeldverteilung (Durchmesser) im Resonator beschrieben. In der Fig. 2 ist lediglich der Strahlenverlauf vom nichtlinearen Reflektor **2** in Richtung zur Blende **4** dargestellt. Nach dem Durchgang durch das Halbleitermaterial der refraktionsgesteuerten Schicht **7**, der Reflexion an der hochreflektierenden Schicht **8** und erneutem Durchgang durch das Halbleitermaterial der refraktionsgesteuerten Schicht **7**, hat die örtliche Intensitätsverteilung für Bereiche kleiner Intensitäten im zeitlichen Impulsverlauf einen größeren Durchmesser **12** als die örtliche Intensitätsverteilung **11**, die den Bereichen des Impulses mit hoher Intensität (Impulsspitze) entspricht. Dadurch wird eine Verlustmodulation realisiert, die mit zunehmender Intensität eine positive Rückkoppelcharakteristik (Verlustverringerung) besitzt.

Der Abstand a der Linse **6** zum nichtlinearen Reflektor **2** ist derart gewählt, daß die Laserstrahlung mit hoher Intensität in der reflektierten Richtung, vom nichtlinearen Reflektor **2** in Richtung zum ersten Reflektor **1**, einen Strahlengang **11** aufweist, der an der Blende **4** einen geringeren Durchmesser aufweist als der Blendendurchmesser, so daß diese reflektierten Strahlen die Blende ungehindert passieren. Für die Laserstrahlung mit geringer Intensität wird im Linsensystem ein Strahlengang **12** erzeugt, der an der Blende **4** einen größeren Durchmesser aufweist als der Blendendurchmesser, so daß diese reflektierten Strahlen die Blende nicht passieren können.

Der Abstand a der Linse **6** zum Reflektor **2** mit der refraktionsgesteuerten Schicht **7**, wird durch die Nichtlinearität der refraktionsgesteuerten Schicht **7**, durch die Ladungsträgerrelaxationszeit sowie durch die pumpleistungsabhängige Laserleistung der Laserquelle **3** bestimmt. Aus diesen Größen läßt sich nach den vorgenannten Beziehungen die Stärke der durch die Laserstrahlung in der refraktionsgesteuerten Schicht **7** erzeugten Zerstreuungslinse ermitteln. Unter Berücksichtigung dieser Größe kann unter Anwendung bekannter Bemessungsregeln für den Resonator der Abstand **a** zwischen der Linse **6** und dem Reflektor **2** berechnet werden.

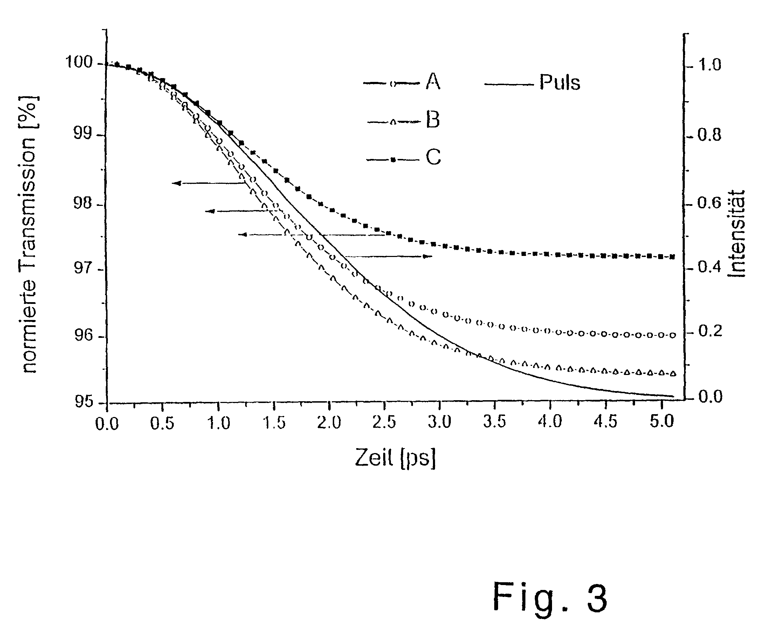

In der **Fig. 3** ist die normierte Transmissionsänderung an der Blende **4** in Abhängigkeit von der Laserintensität für unterschiedliche Abstände **a** der Linse **6** zur refraktionsgesteuerten Schicht **7** dargestellt.

Die durchgezogene Kurve stellt einen Ausschnitt aus dem Impulsverlauf, nämlich den rechten Halbimpuls der durch die Laserquelle **3** erzeugten (Laserstrahl) dar, wobei die Intensität des Laserstrahls auf der rechten vertikalen Achse aufgetragen ist. Die Kurven **A**, **B** und **C** verdeutlichen die während des Impulsverlaufs auftretende Transmissionsänderung an der Blende **4** bzw. dem Faserkern einer faserförmigen Laserquelle in Abhängigkeit vom Abstand **a** zwischen der Linse **6** und der refraktionsgesteuerten Schicht **7**, wobei die Transmissionsänderung auf der linken vertikalen Achse aufgetragen ist. Der Abstand **a** zwischen der Linse **6** und der refraktionsgesteuerten Schicht **7** ist kleiner als die Linsenbrennweite der Linse **6** und beträgt:

| | |
|---|---|
| für die Kurve A | a = f - 8,4 µm |
| für die Kurve B | a = f - 9,2 µm |
| für die Kurve C | a = f - 7,6 µm. |

Die Kombination der Linse **6** und die durch die im Laserresonator zirkulierende Intensität erzeugte Zerstreuungslinse muß so ausgelegt sein, daß für kleine Intensitäten eine schlechtere Transmission durch die Blende bzw. den Faserkern im Vergleich zu hohen Intensitäten realisiert wird. Damit wird eine intensitätsabhängige (nichtlineare) Verlustmodulation realisiert, die zur Kopplung der Moden des Lasers und damit zur Erzeugung kurzer Impulse führt. Anhand der Fig. 3 ist deutlich erkennbar, daß die Transmission des Laserstrahls an der Blende **4** mit abnehmender Intensität stark abnimmt. Aufgrund der Umläufe des Impulses im Resonator gehen innerhalb kürzester Zeiträume die Strahlenanteile mit geringerer Intensität an der Blende **4** verloren, so daß nur Strahlenanteile mit hoher Intensität im Resonator verbleiben und somit ein kurzer Impuls mit hoher Intensität erzeugt wird.

## Patentansprüche

1. Vorrichtung zur Erzeugung kurzer Laserimpulse durch passive Modenkopplung mit einem Resonator, der zwei Reflektoren (1, 2) und ein dazwischen angeordnetes laseraktives Medium (3) aufweist, wobei ein Reflektor (2) optisch nichtlineare Eigenschaften hat und aus einer hochreflektierenden Schicht (8) und einer auf der dem laseraktiven Medium (3) zugewandten Seite der hochreflektierenden Schicht (8) angeordneten Halbleiterschicht (7) besteht, die einen intensitätsabhängigen Brechungsindex aufweist, wobei für das Halbleitermaterial der Halbleiterschicht (7) folgende Bedingungen gelten:

   - durch 2-Photonenabsorption findet eine strahlungsinduzierte Ladungsträgergeneration statt, die zu einer Brechungsindexänderung führt,
   - im Bereich großer Intensität kommt es zu einer Verringerung des Brechungsindex, im Bereich kleiner Intensität kommt es zu einer Vergrößerung des Brechungsindex,
   - für die Energie des Laserphotons $h\nu$ bezogen auf den Bandabstand des Halbleitermaterials $E_g$ gilt: $h\nu < E_g < 1{,}4h\nu$,
   - die Ladungsträgerrelaxationszeit in dem Halbleitermaterial ist wesentlich kürzer als die Pulsumlaufzeit im Resonator und größer oder gleich der Dauer der erzeugten Impulse,

   **dadurch gekennzeichnet, daß**
   im Strahlenverlauf der vom optisch nichtlinearen Reflektor (2) reflektierten Laserstrahlung Mittel zur Begrenzung des Durchmessers der Laserstrahlung angeordnet sind und auf der dem optisch nichtlinearen Reflektor (2) zugewandten Seite der genannten Mittel ein aus mindestens zwei Linsen (5, 6) bestehendes Linsensystem angeordnet ist, wobei die erste auf die genannten Mittel folgende Linse (5) eine kollimierende Wirkung und die darauffolgende zweite Linse (6) eine fokussierende Wirkung auf die Laserstrahlung hat, und der Abstand (a) zwischen der zweiten Linse (6) und der Halbleiterschicht (7) des optisch nichtlinearen Reflektors (2) derart eingestellt ist, daß der sich am Ort der genannten Mittel einstellende Durchmesser der Intensitätsverteilung für kleine Intensitäten (12) größer ist als der Durchmesser des Mittels zur Begrenzung des Durchmessers der Laserstrahlung.

2. Vorrichtung nach Anspruch 1,
   **dadurch gekennzeichnet, daß**
   die Halbleiterschicht (7) eine Dicke besitzt, die größer oder gleich der verwendeten Wellenlänge der Laserstrahlung ist.

3. Vorrichtung nach Anspruch 1,
   **dadurch gekennzeichnet, daß**
   die dem laseraktiven Medium (3) zugewandte Seite der Halbleiterschicht (7) entspiegelt ist.

4. Vorrichtung nach Anspruch 1
   **dadurch gekennzeichnet, daß**
   die Halbleiterschicht (7) aus ionenimplantiertem GaAs oder aus LT-GaAs oder aus amorphem Si besteht.

5. Vorrichtung nach nach Anspruch 1,
   **dadurch gekennzeichnet, daß**
   bei der Verwendung von stab- oder plattenförmigen laseraktiven Medien (3) das Mittel zur Begrenzung des Durchmessers der Laserstrahlung eine Blende (4) ist, die zwischen dem nichtlinearen Reflektor (2) und dem laseraktiven Medium (3) angeordnet ist.

6. Vorrichtung nach Anspruch 1,

**dadurch gekennzeichnet, daß**

bei der Verwendung von faserförmigen laseraktiven Medien (3) die Eintrittsfläche des Faserkerns das Mittel zur Begrenzung des Durchmessers der Laserstrahlung ist.

**7.** Vorrichtung nach Anspruch 1,
**dadurch gekennzeichnet, daß**
der Reflektor (2) mit der hochreflektierenden Schicht (8) auf einem Träger (9) angeordnet ist.

**8.** Vorrichtung nach Anspruch 1,
**dadurch gekennzeichnet, daß**
durch geeignete Dimensionierung der Schichtdicke der Halbleiterschicht (7) sowie der Wege in den optischen Medien (3, 5, 6) der Grad der Kompensation der refraktiven Effekte gezielt einstellbar ist, da die Brechungsindexinkremente für das refraktionsgesteuerte Halbleitermaterial (7) und die optischen Medien (3, 5, 6) umgekehrte Vorzeichen aufweisen.

**Claims**

**1.** Device for producing short laser pulses by passive mode locking with a resonator, which has two reflectors (1, 2) and a laser-active medium (3) arranged between them, in which one reflector (2) has optically non-linear properties and consists of a highly reflective layer (8) and a semiconductor layer (7), which is arranged on the side of the highly reflective layer (8) facing the laser-active medium (3) and has an intensity-dependent refractive index, in which the following conditions are satisfied for the semiconductor material of the semiconductor layer (7):

- radiation-induced charge-carrier generation, which leads to a refractive-index change, occurs owing to 2-photon absorption,
- a decrease of the refractive index takes place in the region of high intensity, an increase of the refractive index takes place in the region of low intensity,
- the following is satisfied for the energy of the laser photon $h\nu$ in relation to the band gap of the semiconductor material $E_g$: $h\nu < E_g < 1.4\ h\nu$,
- the charge-carrier relaxation time in the semiconductor material is substantially shorter than the pulse cycle time in the resonator and greater than or equal to the duration of the pulse which is produced,

**characterised in that**
means for limiting the diameter of the laser radiation are arranged in the beam path of the laser radiation reflected by the optically non-linear reflector (2) and a lens system consisting of at least two lenses (5, 6) is arranged on the side of the said means facing the optically non-linear reflector (2), in which the first lens (5) following the said means has a collimating effect and the subsequent second lens (6) has a focusing effect on the laser radiation, and the distance (a) between the second lens (6) and the semiconductor layer (7) of the optically non-linear reflector (2) is adjusted so that the diameter of the intensity distribution obtained for small intensities (12) at the site of the said means is greater than the diameter of the means for limiting the diameter of the laser radiation.

**2.** Device according to Claim 1,
**characterised in that**
the semiconductor layer (7) has a thickness which is greater than or equal to the laser-radiation wavelength being used.

**3.** Device according to Claim 1,
**characterised in that**
the side of the semiconductor layer (7) facing the laser-active medium (3) is rendered non-reflective.

**4.** Device according to Claim 1,
**characterised in that**
the semiconductor layer (7) consists of ion-implanted GaAs or of LT-GaAs or of amorphous Si.

**5.** Device according to Claim 1,
**characterised in that**,
when laser-active media (3) in rod or plate form are used, the means for limiting the diameter of the laser radiation is a diaphragm (4), which is arranged between the non-linear reflector (2) and the laser-active medium (3).

6.  Device according to Claim 1,
    **characterised in that**,
    when laser-active media (3) in fibre form are used, the entry face of the fibre core is the means for limiting the diameter of the laser radiation.

7.  Device according to Claim 1,
    **characterised in that**
    the reflector (2) with the highly reflective layer (8) is arranged on a support (9).

8.  Device according to Claim 1,
    **characterised in that**
    the degree of compensation for the refractive effects can be adjusted in a controlled way by suitable dimensioning of the layer thickness of the semiconductor layer (7) as well as the paths in the optical media (3, 5, 6), since the refractive-index increments for the controlled-refraction semiconductor material (7) and the optical media (3, 5, 6) have opposite signs.

**Revendications**

1.  Dispositif pour générer de courtes impulsions laser par couplage de mode passif avec un résonateur ayant deux réflecteurs (1, 2) et entre ceux-ci un milieu à activité laser (3),
    un réflecteur (2) ayant des caractéristiques optiques non linéaires et il se compose d'une couche très réfléchissante (8) et sur le côté de la couche très réfléchissante (8), tourné vers le milieu à activité laser (3), une couche semi-conductrice (7) ayant un indice de réfraction dépendant de l'intensité, et la matière semi-conductrice de la couche semi-conductrice (7) répond aux conditions suivantes :

    -   une absorption de deux photons produit une génération de porteurs de charge induite par rayonnement, se traduisant par une variation de l'indice de réfraction,
    -   dans la plage des fortes intensités, l'indice de réfraction diminue et dans la plage des faibles intensités l'indice de réfraction augmente,
    -   pour l'énergie du photon laser $h\nu$ rapportée à l'écart de bande de la matière semi-conductrice $E_g$ on a la relation : $h\nu < E_g < 1{,}4h\nu$,
    -   le temps de relaxation des porteurs de charge dans la matière semi-conductrice est beaucoup plus court que le temps de circulation des impulsions dans le résonateur et plus grand ou égal à la durée des impulsions générées,

    **caractérisé en ce que**
    dans le chemin du rayonnement laser réfléchi par le réflecteur optique non linéaire (2), il y a des moyens pour limiter le diamètre du faisceau laser et sur le côté tourné vers le réflecteur optique non linéaire (2) des moyens indiqués, il est prévu un système de lentilles composé d'au moins deux lentilles (5, 6), la première lentille (5), qui suit les moyens évoqués, présente un effet de collimation et la seconde lentille (6), suivante, présente un effet de focalisation pour le faisceau laser et la distance (a), entre la seconde lentille (6) et la couche semi-conductrice (7) du réflecteur optique non linéaire (2), est réglée pour que le diamètre qui s'établit à l'endroit des moyens indiqués de la répartition de l'intensité pour les petites intensités (12) est plus grand que le diamètre du moyen limitant le diamètre du rayonnement laser.

2.  Dispositif selon la revendication 1,
    **caractérisé en ce que**
    la couche semi-conductrice (7) a une épaisseur supérieure ou égale à la longueur d'ondes du rayonnement laser.

3.  Dispositif selon la revendication 1,
    **caractérisé en ce que**
    le côté de la couche semi-conductrice (7) tourné vers le milieu à activité laser (3) n'est pas réfléchissant.

4.  Dispositif selon la revendication 1,
    **caractérisé en ce que**

la couche semi-conductrice (7) est formée de GaAs à implantation ionique ou de LT-GaAs ou encore de Si amorphe.

5. Dispositif selon la revendication 1,
   **caractérisé en ce que**
   lorsqu'on utilise des milieux à activité laser (3) en forme de tiges ou de plaques, le moyen pour limiter le diamètre du rayonnement laser est un diaphragme (4) placé entre le réflecteur non linéaire (2) et le milieu à activité laser (3).

6. Dispositif selon la revendication 1,
   **caractérisé en ce que**
   lorsqu'on utilise des milieux à activité laser (3) en forme de fibres, la surface d'entrée du noyau laser est le moyen limitant le diamètre du rayon laser.

7. Dispositif selon la revendication 1,
   **caractérisé en ce que**
   le réflecteur (2) est installé avec la couche très réfléchissante (8) sur un support (9).

8. Dispositif selon la revendication 1,
   **caractérisé en ce que**
   par un dimensionnement approprié de l'épaisseur de la couche semi-conductrice (7) ainsi que par les milieux optiques (3, 5, 6) on règle de manière précise le degré de compensation des effets de réfraction car les incréments de l'indice de réfraction ont des signes algébriques opposés pour la matière semi-conductrice à réfraction commandée (7) et les milieux optiques (3, 5, 6).

Fig. 1

Fig. 2

EP 1 166 403 B1

Fig. 3